# EUROPÄISCHE PATENTSCHRIFT

(11) **EP 0 958 533 B1**
(45) Veröffentlichungstag und Bekanntmachung des Hinweises auf die Patenterteilung: **10.04.2002**
(21) Anmeldenummer: 98906896.0
(22) Anmeldetag: 28.01.1998
(51) Int. Cl.: G05B 19/418

(54) **HÖRAKTIVER KOMMUNIKATIONSTEILNEHMER, KOMMUNIKATIONSVERFAHREN UND KOMMUNIKATIONSSYSTEM MIT HÖRAKTIVEN KOMMUNIKATIONSTEILNEHMERN**
AUDIO-ACTIVE COMMUNICATION STATIONS, COMMUNICATION METHOD AND COMMUNICATION SYSTEM WITH AUDIO-ACTIVE COMMUNICATION STATIONS
TERMINAL AUDIO-ACTIF D'UN SYSTEME DE COMMUNICATION, PROCEDE DE COMMUNICATION ET SYSTEME DE COMMUNICATION EQUIPE DE TERMINAUX AUDIO-ACTIFS DE CE TYPE

(30) Priorität: 10.02.1997 EP 97102093
(43) Veröffentlichungstag der Anmeldung: 24.11.1999
(73) Patentinhaber: SIEMENS AKTIENGESELLSCHAFT, 80333 München (DE)
(72) Erfinder: STEINDL, Günter, D-92284 Poppenricht (DE)
(86) Internationale Anmeldenummer: EP9800456
(87) Internationale Veröffentlichungsnummer: WO9835275

(56) Entgegenhaltungen:
- EP-A- 0 183 273
- GB-A- 2 064 920
- GB-A- 2 148 563
- R.HULSEBOS: "Veldbussen" 1996 , KLUWER TECHNIEK , DEVENTER XP002032670 siehe Seite 310, Zeile 10 - Zeile 41; Abbildung 12.2 siehe Seite 331, Zeile 13 - Seite 333, Zeile 23
- PATENT ABSTRACTS OF JAPAN vol. 014, no. 297 (E-0945), 27.Juni 1990 & JP 02 094848 A (YASKAWA ELECTRIC MFG CO LTD), 5.April 1990,
- PATENT ABSTRACTS OF JAPAN vol. 007, no. 192 (P-218), 23.August 1983 & JP 58 092006 A (TOKYO SHIBAURA DENKI KK), 1.Juni 1983,

## Beschreibung

Kommunikationssysteme, wie z. B. der Profibus, wie er in den DIN Normen 19245 T1 bzw. 19245 T2 und in dem Dokument Peter Neumann: Kommunikationssysteme in der Automatisierungstechnik, Verlag Technik, Berlin beschrieben ist, dienen der Realisierung des Informationsaustausches zwischen unterschiedlichen Teilsystemen einer technischen Anlage.

Eine Besonderheit nimmt in diesem Zusammenhang der Echtzeitdatenaustausch, wie er z. B. zur Prozeßüberwachung oder zur automatischen Steuerung technischer Systeme gefordert ist, ein. Der Profibus (Process Field Bus) ist ein Normungsvorhaben, das von Automatisierungsfirmen und wissenschaftlichen Einrichtungen der Bundesrepublik Deutschland realisiert wird.

Der Profibus ist ein Feldbussystem und dient damit im engeren Sinne der standardisierten Verbindung von Automatisierungsgeräten im Feldbereich.

Einsatzgebiete für den Profibus sind z. B. der autarke Einsatz als Prozeßdatenbussystem für Automatisierungsvorhaben oder als unterlagerte Kommunikationsebene in Prozeßleitsystemen. Als Kommunikations- oder Busteilnehmer kommen damit gleichermaßen speicherprogrammierbare Steuerungen, numerische Steuerungen, dezentrale Automatisierungsgeräte oder busfähige Sensoren bzw. Aktoren in Betracht.

Jeder Busteilnehmer ist ein Endgerät des Kommunikationssystems. Als solches weist es ein Kommunikationsmittel auf, welches den Anschluß des Teilnehmers an das Kommunikationssystem, den Bus, ermöglicht. Das Kommunikationsmittel, das einen eigenen Prozessor oder einen sogenannten ASIC aufweisen kann, steuert im wesentlichen unabhängig von den sonstigen Aktionen des Teilnehmers die Übertragungsvorgänge.

Der Datenaustausch zwischen Kommunikationsmittel und Endgerät erfolgt beispielsweise dadurch, daß ein Teil des Speichers des Endgerätes quasi als "Fenster" auf den im Kommunikationsmittel vorgesehenen Speicher abgebildet wird. Man bezeichnet diese Methode als Shared Memory oder Memory Mapped I/O. Daten vom Bus werden in dem dafür vorgesehenen Speicherbereich des Kommunikationsmittels zwischengespeichert. Die Steuerungseinheit des Endgerätes kann dann die Daten direkt vom Kommunikationsmittel auslesen, als seien sie bereits in seinem eigenen Hauptspeicher gespeichert.

Beim Profibus unterscheidet man zwischen einer physikalischen und einer logischen Topologie. Die physikalische Topologie wird im wesentlichen durch ein Linien-Interface nach RS-485 bestimmt. Der Profibus ist folglich ein serieller Bus. Die logische Topologie entspricht dagegen einerseits einer Ringverkettung bestimmter Busteilnehmer, die im folgenden als aktive Teilnehmer bezeichnet werden, und andererseits einer Sternverkettung jeweils eines aktiven Teilnehmers mit den verbleibenden Busteilnehmern, die nicht in diese Ringverkettung eingeschlossen sind und die im folgenden als passive Teilnehmer bezeichnet werden.

Die Berechtigung für einen Buszugriff wird unter den aktiven Busteilnehmern nach einem Kennzeichnungsverfahren vergeben, wobei das an sich bekannte Token-Ring-Verfahren das gebräuchlichste Verfahren ist. Der Token, ein als Kennzeichen wirkendes spezielles Bitmuster, wird von einem aktiven Teilnehmer zum nächsten aktiven Teilnehmer entsprechend der logischen Ringverkettung weitergereicht. Der den Token besitzende aktive Teilnehmer hat die Zugriffsberechtigung auf das Medium inne, die den Zugriff auf den Bus entweder für begrenzte Zeit oder für eine feste Anzahl von Übertragungsvorgängen gestattet.

Zwischen jeweils einem aktiven Teilnehmer und einem oder mehreren passiven Teilnehmern besteht eine logische Sternverkettung. Der aktive Teilnehmer einer solchen Sternverkettung wird im folgenden als Master bezeichnet. Durch eine globale Funktion, die im jeweiligen aktiven Teilnehmer realisiert ist, werden Daten von den passiven Busteilnehmern abgeholt. Dieses Abholen wird im folgenden als Polling bezeichnet. Ein passiver Busteilnehmer darf erst dann auf das Medium zugreifen (Daten senden), wenn er vom jeweiligen aktiven Teilnehmer die "Erlaubnis" (polling) zugeteilt bekommt.

Aus der GB 2 148 563 A bzw. aus der Druckschrift "Veldbussen", Kapitel 12, R. Hulsebos, Kluwer Techniek, 1996, ist ein höraktiver Kommunikationsteilnehmer bekannt. Dieser hat keine eigene Sendeberechtigung, hört sämtliche Kommunikationsvorgänge mit und kann lediglich solche Daten empfangen, die für ihn bestimmt sind, was anhand einer diesen Daten zugeordneten Zielkennung erkennbar ist.

Aus der EP 0 689 146 A2 ist ein Kommunikationsteilnehmer bekannt, der mit einem Filter bzw. mit einer Filtertabelle versehen ist. Der Kommunikationsteilnehmer empfängt bzw. verarbeitet nur solche Daten, deren Kennung mit einem in dem Filter bzw. in der Filtertabelle abgelegten Eintrag übereinstimmt.

Nachteilig beim bisher im Stand der Technik bekannten Kommunikationsverfahren ist, daß zwischen passiven Kommunikationsteilnehmern, die keine eigene Sendeberechtigung haben, kein direkter Datenaustausch erfolgen kann.

Der vorliegenden Erfindung liegt die Aufgabe zugrunde, einen passiven Kommunikationsteilnehmer anzugeben, der derart ertüchtigt ist, daß er ein von einem anderen passiven Kommunikationsteilnehmer über den Bus gesendetes Datum unmittelbar empfangen kann.
Darüber hinaus ist ein Kommunikationssystem anzugeben, in dem ein von einem ersten passiven Kommunikationsteilnehmer über den Bus übertragenes Datum von einem anderen passiven Kommunikationsteilnehmer unmittelbar empfangen werden kann.

Im Hinblick auf einen höraktiven Kommunikationsteilnehmer wird die Aufgabe mit den im Anspruch 1 angegebenen Maßnahmen gelöst, im Hinblick auf ein Kommunikationssystem mit den im Anspruch 3 angegebenen Maßnahmen.

Gemäß einer vorteilhaften Ausgestaltung ist für den höraktiven Kommunikationsteilnehmer ein Pufferspeicherbereich vorgesehen, in dem ein empfangenes Datum zwischenspeicherbar ist und aus dem das Datum in einen Eingangsspeicherbereich transferierbar ist, sobald feststeht, daß das empfangene Datum für den jeweiligen höraktiven Kommunikationsteilnehmer bestimmt ist. Auf diese Weise ist eine temporäre Speicherung der über den Bus übertragenen Daten möglich, wobei die Zielund Ursprungskennung des empfangenen Datums innerhalb des Pufferspeicherbereiches auswertbar sind, so daß nur ein Datum, das tatsächlich für den jeweiligen höraktiven Kommunikationsteilnehmer bestimmt ist, in dessen Eingangsspeicherbereich transferiert wird, so daß folglich die Verarbeitung und Auswertung der Nutzdaten des empfangenen Datums durch die erfindungsgemäße Ausgestaltung des höraktiven Kommunikationsteilnehmers nicht beeinflußt ist.

In einem Kommunikationssystem mit aktiven Kommunikationsteilnehmern und passiven Kommunikationsteilnehmern, das durch ein Bussystem für industrielle Steuerungen, insbesondere ein Bussystem mit speicherprogrammierbaren Steuerungen, gebildet ist, ist der erfindungsgemäße höraktive Kommunikationsteilnehmer vorteilhaft einsetzbar, da mit einem gemäß der Erfindung ausgestalteten höraktiven Kommunikationsteilnehmer die Kommunikationsvorgänge innerhalb des Kommunikatiohssystemes effektiver handhabbar sind.

In einer vorteilhaften Ausgestaltung des Kommunikationssystemes zeichnet sich der höraktive Kommunikationsteilnehmer dadurch aus, daß für ihn ein Pufferspeicherbereich vorgesehen ist, in dem ein empfangenes Datum zwischenspeicherbar ist und aus dem das Datum in einen Eingangsspeicherbereich transferierbar ist, sobald feststeht, daß das empfangene Datum für den jeweiligen höraktiven Kommunikationsteilnehmer bestimmt ist. Die Vorteile, die in diesem Zusammenhang für den einzelnen erfindungsgemäß ausgestalteten Kommunikationsteilnehmer genannt wurden, gelten analog auch für das Kommunikationssystem, im dem der Kommunikationsteilnehmer zum Einsatz kommt.

Für die erfindungsgemäßen Lösungen bzw. deren Ausgestaltungen kommt mit Vorteil als Bussystem ein serieller Bus, insbesondere der Profibus, zur Anwendung. Ein serieller Bus ermöglicht eine störungsfreie Datenübertragung auch über weite Strecken und ist daher für den Einsatz in Industrieumgebungen besonders geeignet. Der Profibus hat sich für den Einsatz bei Automatisierungsvorhaben bewährt und hat dementsprechend eine weite Verbreitung gefunden.

Weitere Vorteile und erfinderische Einzelheiten ergeben sich aus der nachfolgenden Beschreibung eines Ausführungsbeispiels anhand der Figuren und in Verbindung mit den Unteransprüchen.

Im einzelnen zeigen:
- FIG 1: Busteilnehmer und Kommunikationssystem (Bus) beim Profibus,
- FIG 2: Layout eines über den Bus zu übertragenden Datums,
- FIG 3: zur Ausführung des erfindungsgemäßen Verfahrens ertüchtigte Busteilnehmer und
- FIG 4: Teilnehmer eines exemplarischen Kommunikationsvorganges gemäß der Erfindung.

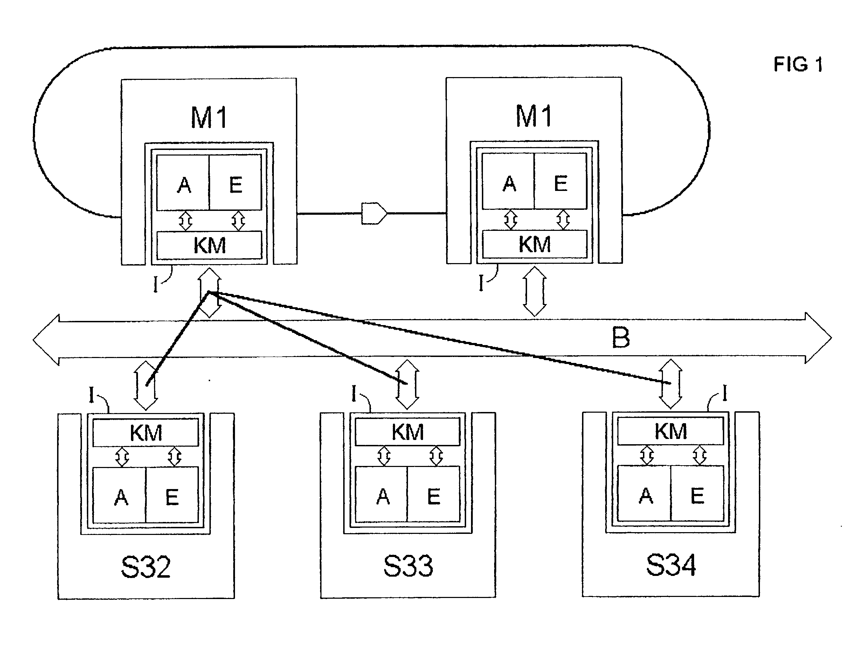

An einen Linienbus B sind gemäß FIG 1 mehrere aktive Teilnehmer M1, M2 und passive Teilnehmer S32, S33, S34 angeschlossen. Das Busprotokoll sei Profibus-DP. Die Teilnehmer M1, M2, S32-S34 seien Automatisierungsgeräte zur Steuerung und oder Überwachung eines technischen Prozesses. Die aktiven Teilnehmer M1, M2 seien Zentraleinheiten einer speicherprogrammierbaren Steuerung (SPS). Die passiven Teilnehmer S32-S34 seien busfähige Sensoren oder Aktoren bzw. dezentrale Automatisierungsgeräte z.B. zur Ausgabe oder Aufnahme von Statusinformationen des technischen Prozesses. Der technische Prozeß wird im wesentlichen durch das den aktiven Teilnehmern M1, M2 vorgegebene Steuerungsprogramm überwacht bzw. gesteuert. Insbesondere ist mit der jeweiligen Struktur des Steuerungsprogramms Art und Richtung des über den Bus erfolgenden Datenflusses vorgegeben.

Im Stand der Technik ist eine unmittelbare Kommunikation zwischen den passiven Teilnehmern S32-S34 nicht vorgesehen; statt dessen sind Kommunikationen vorgesehen, bei denen der aktive Teilnehmer M1, M2 Daten vom jeweiligen passiven Teilnehmer S32-S34 abholt oder Daten an den jeweiligen passiven Teilnehmer S32-S34 übermittelt.

Sind dennoch Daten, die im Bereich eines ersten passiven Teilnehmers, z.B. S33, vorliegen, an einen zweiten passiven Teilnehmer, z.B. S32, zu transferieren, so erfolgt dies unter Einbeziehung mindestens eines aktiven Busteilnehmers, z.B. M1.

Exemplarisch wird im folgenden ein Kommunikationsvorgang beschrieben, bei dem ein Datum D, das im Bereich eines ersten passiven Busteilnehmers S33 vorliegt, an einen zweiten Busteilnehmer S32 zu übermitteln ist. Auf diese Konstellation wird, sofern nicht ausdrücklich anders vermerkt, zur weiteren Erläuterung eines Ausführungsbeispiels der Erfindung stets zurückgegriffen.

Der aktive Busteilnehmer holt ein Datum D, z.B. einen Datensatz oder einen Eingangswert, beim passiven Busteilnehmer S33 ab. Dazu sendet der aktive Busteilnehmer M1 dem passiven Busceilnehmer S33 ein spezielles Datum D, das diesen veranlaßt, das zu sendende Datum D an den aktiven Busteilnehmer M1 zu übermitteln.

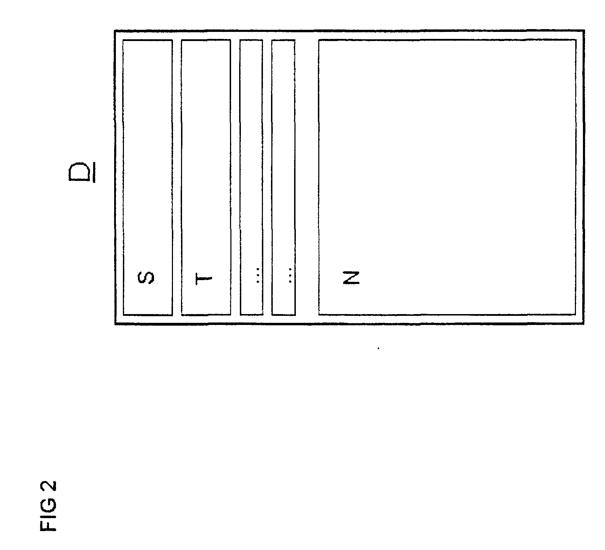

Jedes zu sendende Datum D wird - gemäß den Vorgaben des Busprotokolls - zumindest um Informationen über den Empfänger, die Zielkennung T, und den Absender, die Ursprungskennung S, ergänzt. Ein Datum D besteht folglich zumindest aus der Zielkennung T, der Ursprungskennung S und den eigentlichen Nutzdaten N. Eine exemplarische Darstellung der sich damit ergebenden Struktur des Datums ist in FIG 2 angegeben. Anhand der Zielkennung T ist der Adressat eines Datums D eindeutig identifizierbar. Im vorliegenden Falle ist der Adressat also der aktive Teilnehmer M1, der das Datum D empfängt und damit auswerten kann.

Aufgrund des dem aktiven Teilnehmer M1 vorgegebenen Steuerungsprogramms steht - unabhängig vom konkreten Kommunikationsvorgang - die Verarbeitung und Behandlung der Nutzdaten N des empfangenen Datums D fest. Im Rahmen des gewählten exemplarischen Kommunikationsvorganges sind die Nutzdaten N an den passiven Teilnehmer S32 zu transferieren. Im Bereich des aktiven Teilnehmers M1 wird also ein Datum D generiert, das an den passiven Teilnehmer S32 übermittelt wird. Auf diese Weise trifft die vom Slave S33 ausgesandte Nachricht schließlich beim Slave S32 ein.

Die physikalische Übertragung der Daten ist an sich bekannt. Zur Organisation der Datenübertragung ist für jeden Busteilnehmer M1, M2, S32-S34, also sowohl für die aktiven als auch für die passiven Busteilnehmer, wie in FIG 1 dargestellt, jeweils mindestens ein Eingangsbereich E und mindestens ein Ausgangsbereich A vorgesehen.

Ein zu sendendes Datum D wird vom jeweiligen Busteilnehmer M1, M2, S32-S34 jeweils in dessen Ausgangsbereich A abgelegt und ist damit über den Bus B übertragbar. Beim Empfänger M1, M2, S32-S34 des gesendeten Datums D wird das Datum D in dessen Eingangsbereich E transferiert.

Sobald der Empfänger M1, M2, S32-S34 das Vorliegen des Datums D in seinem Eingangsbereich E registriert, kann das empfangene Datum D ausgewertet werden. Die Auswertung bezieht sich zumindest auf die im Datum D enthaltene Zielkennung T. Stimmt die Zielkennung T mit der jeweiligen Kennung des Empfängers überein, so ist das Datum an seiner Zieladresse eingetroffen.

Damit ist das im Stand der Technik bekannte Kommunikationsprinzip zwischen passiven Busteilnehmern S32-S34, die keine Sendeberechtigung haben, erläutert. Die Nachrichten zwischen zwei passiven Busteilnehmern, z.B. S32 und S33, nehmen stets den Umweg über einen aktiven Busteilnehmer M1.

Die vorliegende Erfindung vermeidet bei Kommunikationsvorgängen zwischen passiven Busteilnehmern S32-S34 den nachteiligen Umweg über einen aktiven Busteilnehmer M1, M2.

Dazu ist ein passiver Busteilnehmer S32-S34 derart ertüchtigt, daß er die über den Bus B erfolgenden Übertragungen "mithören" kann. Durch dieses Mithören ist es für einen passiven Busteilnehmer S32-S34 - z.B. den Slave S32 - möglich, das jeweils aktuell über den Bus B übertragene Datum D zu empfangen, unabhängig davon, ob es für ihn bestimmt ist.

Das für jeden Busteilnehmer M1, M2, S32-S34 bzw. das jeweilige Interface I vorgesehene Kommunikationsmittel KM überwacht bereits beim weiter oben beschriebenen Kommunikationsvorgang die Übertragungen über den Bus, ist jedoch so ausgelegt, daß ausschließlich ein Datum D, dessen Zielkennung T mit der Kennung des jeweiligen Busteilnehmers übereinstimmt, empfangen wird.

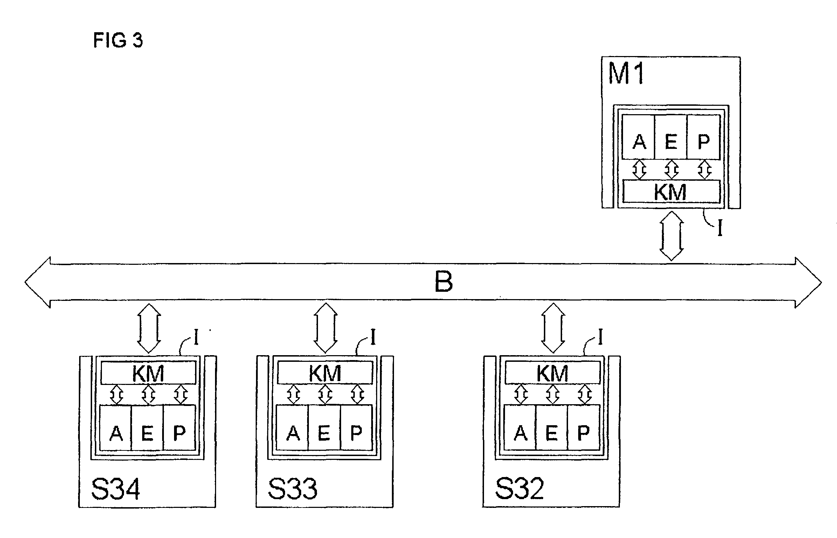

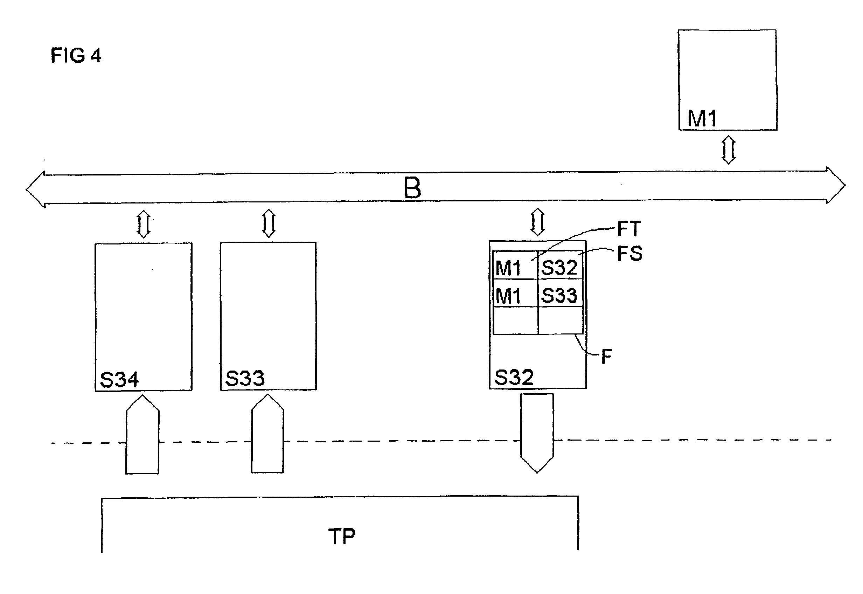

Gemäß der vorliegenden Erfindung ist das Kommunikationsmittel KM dagegen so ausgestaltet, daß es in der Lage ist, jedes Datum D, das über den Bus B übertragen wird, zu empfangen. Dies ermöglicht eine effiziente Kommunikation zwischen passiven Busteilnehmern S32-S34, die im folgenden anhand von FIG 3 bzw. FIG 4 beschrieben wird.

Ein Datum D, das vom Slave S33 an den Slave S32 übermittelt werden soll, wird zunächst an einen aktiven Teilnehmer M1, M2 - z.B. den Master M1 - übertragen. Das Datum D wird dabei zumindest um die Zielkennung T des Empfängers, in diesem Falle also die des Masters M1, und die Ursprungskennung S des Senders, in diesem Falle also die des passiven Teilnehmers S33 ergänzt.

Diese Übertragung hören jetzt die passiven Busteilnehmer S32-S34 mit und übernehmen dabei das Datum D in einen Pufferspeicherbereich P (FIG 3).

Sobald ein passiver Busteilnehmer S32-S34 das Vorliegen eines Datums D in seinem Pufferspeicherbereich P registriert, kann die Auswertung des Datums erfolgen. Diese Auswertung bezieht sich beim erfindungsgemäßen Kommunikationsverfahren bzw. beim gemäß der Erfindung ertüchtigten Kommunikationsteilnehmer S32-S34 auf die Zielkennung T und auf die Ursprungskennung S des Datums D.

Zur Auswertung von Zielkennung T und Ursprungskennung S eines Datums D ist gemäß der Erfindung für den jeweiligen passiven Busteilnehmer S32-S34 eine Filtertabelle F vorgebbar (FIG 4). Jeder Eintrag dieser Filtertabelle F weist zumindest zwei Parameter FT, FS auf, wobei beide Parameter die Adresse eines Kommunikationsteilnehmers bezeichnen, wobei z.B. der erste Parameter FT den Empfänger M1, M2, S32-S34 eines Datums D und der zweite Parameter FS den Sender M1, M2, S32-S34 eines Datums D bezeichnet.

Die Anzahl n der Einträge der Filtertabelle F ist im wesentlichen nur durch den für die Filtertabelle F zur Verfügung stehenden Speicherbereich beschränkt. Damit ergeben sich die Filtertabelleneinträge FT₁, FS₁ - FTₙ, FSₙ.

Zur Auswertung des im Pufferspeicherbereich P vorliegenden Datums D wird vom jeweiligen passiven Busteilnehmer S32-S34 die Zielkennung T und die Ursprungskennung S des Datums D mit den jeweiligen Filtertabelleneinträgen FT₁, FS₁ - FTₙ, FSₙ verglichen. Stimmt einer FTₓ, FSₓ der Filtertabelleneinträge FT₁, FS₁ - FTₙ, FSₙ mit der Zielkennung T und der Ursprungskennung S des ausgewerteten Datums D überein, so steht für den jeweiligen passiven Busteilnehmer S32-S34, im Falle der exemplarisch beschriebenen Kommunikation für den passiven Busteilnehmer S32, fest, das das Datum D für ihn bestimmt ist.

Der jeweilige passive Busteilnehmer S32-S34 übernimmt das Datum D, von dem nunmehr feststeht, das es für ihn bestimmt ist, aus dem Pufferspeicherbereich P in seinen Eingangsbereich E (FIG 3).

Mit dem Vorliegen des Datums D im Eingangsbereich E des Empfängers S32 beginnt in an sich bekannter Weise die Auswertung bzw. Verarbeitung der Nutzdaten N des Datums D. Die anderen Busteilnehmer, für die das Datum D nicht bestimmt war, verwerfen den Inhalt ihres Pufferspeicherbereiches P bzw. werten den Inhalt nicht aus.

Die Einträge FT₁, FS₁ - FTₙ, FSₙ der Filtertabelle F ergeben sich im Rahmen der Projektierung der technischen Anlage, in der das Kommunikationssystem mit den gemäß der Erfindung ausgestalteten Busteilnehmern S32-S34 zum Einsatz kommt.

Die Filtertabelle repräsentiert damit die Interdependenzien der jeweiligen Busteilnehmer. Sind z.B. die passiven Busteilnehmer S33 und S34 Sensoren bzw. dezentrale Automatisierungsgeräte zur Aufnahme von Statusinformationen eines zu steuernden oder zu überwachenden technischen Prozesses TP, dessen Statusinformationen von einem weiteren dezentralen Automatisierungsgerät, z.B. dem passiven Busteilnehmer S32, z.B. zur Steuerung einer konkreten technischen Vorrichtung des Prozesses TP benötigt werden, so steht mit der vorstehend kurz angerissenen Projektierung der technischen Anlage bereits fest, daß die vom Busteilnehmer S33 gelieferten Daten zumindest vom Busteilnehmer S32 ausgewertet werden. Umfaßt das Kommunikationssystem der speziellen technischen Anlage zumindest einen aktiven Busteilnehmer M1, so enthält die Filtertabelle F des passiven Busteilnehmers S32 folglich zumindest den Eintrag FTₓ=M1, FSₓ=S33.

Die Filtertabelle F ist den jeweiligen Busteilnehmern S32-S34 entweder im Zusammenhang mit der Inbetriebnahme des Kommunikationssystemes fest vorgebbar oder über eine Benutzerschnittstelle, z.B. über einen Codierschalter oder eine Tastatur, auch nachträglich veränderbar.

Die mit der Erfindung ermöglichte Kommunikationsbeziehung ist auch für den Fall einer Datenübertragung von einem aktiven Teilnehmer M1, M2, in diesem Falle dem Master M1, an einen passiven Teilnehmer S32-S34, in dem Falle den passiven Teilnehmer S32, vorteilhaft einsetzbar.

Im Falle einer Datenübertragung vom aktiven Teilnehmer M1 an den passiven Teilnehmer S32 ist das Datum D zumindest um die Zielkennung T (T=S32) und die Ursprungskennung S (S=M1) ergänzt. Das Datum D enthalte z.B. Nutzdaten N, die sämtlichen passiven Teilnehmer S32-S34 zur Reaktion auf eine Alarmsituation zu übermitteln sind. Bei der im Stand der Technik bekannten Datenübertragung sendet der Master M1 ein und dasselbe Datum D mit jeweils angepaßten Zielkennung T sequentiell nacheinander an sämtliche beteiligten passiven Teilnehmer S32-S34. Bei der durch die Erfindung ermöglichte Datenübertragung sendet der Master M1 das Datum D nur an einen passiven Teilnehmer S32, wobei die verbleibenden passiven Teilnehmer S33-S34 dasselbe Datum D zeitgleich wie der eigentliche Adressat, der Teilnehmer S32, empfangen, sofern in deren Filtertabelle F der Eintrag FTₓ=S32, FSₓ=M1 enthalten ist.

Diese Kommunikationsbeziehung ist vorteilhaft, weil der aktive Teilnehmer M1 die Übertragung des. Datums D nur einmal veranlassen muß, so daß die Initiierung der ansonsten erforderlichen weiteren Übertragungsvorgänge entfällt, so daß der aktive Teilnehmer M1 von Kommunikationsvorgängen entlastet wird und entsprechend die eingesparte Rechenzeit anderweitig zur Verfügung steht.

Weiterhin ist diese Kommunikationsbeziehung vorteilhaft, weil sowohl der eigentliche Adressat, der passive Teilnehmer S32, als auch die weiteren passiven Teilnehmer S33-S34 mit entsprechenden Einträgen FTₓ, FSₓ in der Filtertabelle F das Datum D zeitgleich empfangen. Damit ist z.B. eine Synchronisation der passiven Teilnehmer S32, S33 und S34 möglich. Weiterhin kann sichergestellt werden, daß eine eventuelle Alarmbehandlung durch die passiven Teilnehmer S32-S34 zeitgleich ausgeführt wird, was mit der im Stand der Technik bekannten Kommunikation, bei der der aktive Teilnehmer M1 das Datum D sequentiell an sämtliche passive Teilnehmer S32-S34 übermittelt, nicht möglich wäre.

Zusammenfassend kann die Erfindung wie folgt kurz dargestellt werden: Ein Kommunikationsteilnehmer S32-S34, der als passiver Teilnehmer eines Kommunikationssystems keine eigene Sendeberechtigung hat, jedoch sämtliche Kommunikationsvorgänge mithört, gemäß dem Stand der Technik jedoch lediglich solche Daten D empfangen kann, die auch für ihn bestimmt sind, was anhand einer den Daten D zugeordneten Zielkennung T zweifelsfrei erkennbar ist, ist gemäß der Erfindung ertüchtigt, auch solche Daten D zu empfangen, deren Ziel- T und Ursprungskennung S mit einem Eintrag FT, FS der im gemäß der Erfindung ertüchtigten Kommunikationsteilnehmer S32-S34 vorgesehenen Filtertabelle F übereinstimmt. Auf diese Weise ist vorteilhafterweise einerseits eine direkte Kommunikation zwischen passiven Kommunikationsteilnehmern S32-S34 möglich und andererseits die gleichzeitige Kommunikation eines aktiven und oder passiven Senders M1, M2, S32-S34 mit mehreren, gemäß der Erfindung ertüchtigten passiven Kommunikationsteilnehmern S32-S34 möglich.

## Patentansprüche

1. Höraktiver Kommunikationsteilnehmer (S32-S34) zum Anschluß an ein Bussystem (B) für industrielle Steuerungen, insbesondere ein Bussystem (B) mit speicherprogrammierbaren Steuerungen,
- wobei der höraktive Kommunikationsteilnehmer (S32-S34) eine eigene Kennung (K) aufweist,
- wobei für den höraktiven Kommunikationsteilnehmer (S32-S34) eine Filtertabelle (F) mit mindestens einem Eintrag mit jeweils mindestens zwei Parametern (FTₓ, FSₓ) vorgesehen ist,
- wobei der erste Parameter (FTₓ) eine Zielkennung (T) darstellt,
- wobei der zweite Parameter (FSₓ) eine Ursprungskennung (S) darstellt,
- wobei der höraktive Kommunikationsteilnehmer (S32-S34) ein über den Bus (B) zu ünertragendes, zumindest eine Zielkennung (T) und eine Ursprungskennung (S) aufweisendes, Datum (D) jeweils
- zum einen dann empfängt, wenn die Zielkennung (T) des Datums (D) mit seiner eigenen Kennung (K) übereinstimmt und
- zum anderen dann empfängt, wenn die Zielkehnung (T) und die Ursprungskennung (S) des Datums (D) mit den entsprechenden Parametern (FTₓ, FSₓ) eines Eintrags der Filtertabelle (F) übereinstimmen.

2. Höraktiver Kommunikationsteilnehmer nach Anspruch 1, **dadurch gekennzeichnet, daß** ein Pufferspeicherbereich (P) vorgesehen ist, in dem ein empfangenes Datum (D) zwischenspeicherbar ist, und aus dem das Datum (D) in einen Eingangsspeicherbereich (E) transferierbar ist, sobald feststeht, daß das empfangene Datum (D) für den jeweiliaen höraktiven Kommunikationsteilnehmer (S32-S34) bestimmt ist.

3. Durch ein Bussystem (B) für industrielle Steuerungen, insbesondere ein Bussystem mit speicherprogrammierbaren Steuerungen, gebildetes Kommunikationssystem mit aktiven Kommunikationsteilnehmern (M1, M2) und passiven Kommunikationsteilnehmern (S32-S34),
**dadurch gekenzeichnet,**
daß mindestens einer der passiven Kommunikationsteilnehmer (S32-S34) ein höraktiver Kommunikationsteilnehmer gemäß Anspruch 1 oder Anspruch 2 ist.

4. Kommunikationssystem nach Anspruch 3, **dadurch gekennzeichnet, daß** für den höraktiven Kommunikationsteilnehmer (S32-S34) ein Pufferspeicherbereich (P) vorgesehen ist, in dem ein empfangenes Datum (D) zwischenspeicherbar ist, und aus dem das Datum (D) in einen Eingangsspeicherbereich (E) transferierbar ist, sobald feststeht, daß das empfangene Datum (D) für den jeweiligen höraktiven Kommunikationsteilnehmer (S32-S34) bestimmt ist.

## Claims

1. Audioactive communication node (S32-S34) for connection to a bus system (B) for industrial control systems, in particular a bus system (B) with memory-programmable control systems,
- wherein the audioactive communication node (S32-S34) has its own code (K),
- wherein a filter table (F) having at least one entry comprising at least two parameters (FTₓ, FSₓ) in each case is provided for the audioactive communication node (S32-S34),
- wherein the first parameter (FTₓ) is a target code (T),
- wherein the second parameter (FSₓ) is an origin code (S),
- wherein the audioactive communication node (S32-S34) receives a datum (D) to be transmitted via the bus (B) and has at least a target code (T) and an origin code (S)
- on the one hand, if the target code (T) of the datum (D) corresponds to its own code (K) and
- on the other hand, if the target code (T) and the origin code (S) of the datum (D) corresponds to the appropriate parameters (FTₓ, FSₓ) of an entry in the filter table (F).

2. Audioactive communication node according to Claim 1, **characterized in that** a buffer memory region (P) is provided in which a received datum (D) can be temporarily stored and out of which the datum (D) can be transferred to an input memory region (E) as soon as it is clear that the received datum (D) is intended for the respective audioactive communication node (S32-S34).

3. Communication system that is formed by a bus system (B) for industrial control systems, in particular a bus system with memory-programmable control systems and that has active communication nodes (M1, M2) and passive communication nodes (S32-S34), **characterized in that** at least one of the passive communication nodes (S32-S34) is an audioactive communication node in accordance with Claim 1 or Claim 2.

4. Communication system according to Claim 3, **characterized in that**, for the audioactive communication node (S32-S34), a buffer memory region (P) is provided in which a received datum (D) can be temporarily stored and out of which the datum (D) can be transferred to an input memory region (E) as soon as it is clear that the received datum (D) is intended for the respective audioactive communication node (S32-S34).

## Revendications

1. Terminal de communication audio-actif (S32 à S34) pour le raccordement à un système de bus (B) pour des commandes industrielles, notamment à un système de bus (B) avec des commandes programmables en mémoire,
- dans lequel le terminal de communication audio-actif (S32 à S34) a un identificateur particulier (K),
- dans lequel il est prévu pour le terminal de communication audio-actif (S32 à S34) un tableau de filtrage (F) comportant au moins un enregistrement ayant respectivement au moins deux paramètres (FTₓ, FSₓ),
- le premier paramètre (FTₓ) représentant un identificateur de destination (T),
- le deuxième paramètre (FSₓ) représentant un identificateur d'origine (S),
- dans lequel le terminal de communication audio-actif (S32 à S34) reçoit une donnée (D), à transmettre par l'intermédiaire du bus (B) et comportant au moins un identificateur de destination (T) et un identificateur d'origine (S), à chaque fois
- d'une part lorsque l'identificateur de destination (T) de la donnée (D) coïncide avec son propre identificateur (K) et
- d'autre part lorsque l'identificateur de destination (T) et l'identificateur d'origine (S) de la donnée (D) coincident avec les paramètres correspondants (FTₓ, FSₓ) d'un enregistrement du tableau de filtrage (F).

2. Terminal de communication audio-actif selon la revendication 1, **caractérisé par le fait qu'**il est prévu une zone de mémoire tampon (P) dans laquelle une donnée reçue (D) est mémorisée temporairement et à partir de laquelle la donnée (D) peut être transférée dans une zone de mémoire d'entrée (E) dès qu'il est établi que la donnée reçue (D) est destinée au terminal de communication audio-actif (S32 à S34) respectif.

3. Système de communication formé par un système de bus (B) pour des commandes industrielles, notamment par un système de bus avec des commandes programmables en mémoire, et comportant des terminaux de communication actifs (M1, M2) et des terminaux de communication passifs (S32 à S34), **caractérisé par le fait qu'**au moins l'un des terminaux de communication passifs (S32 à S34) est un terminal de communication audio-actif selon la revendication 1 ou la revendication 2.

4. Système de communication selon la revendication 3, **caractérisé par le fait que**, pour le terminal de communication audio-actif (S32 à S34), il est prévu une zone de mémoire tampon (P) dans laquelle une donnée reçue (D) peut être mémorisée temporairement et à partir de laquelle la donnée (D) peut être transférée dans une zone de mémoire d'entrée (E) dès qu'il est établi que la donnée reçue (D) est destinée au terminal de communication audio-actif (S32 à S34) respectif.
